# EUROPÄISCHE PATENTSCHRIFT

(11) **EP 3 298 887 B1**
(45) Veröffentlichungstag und Bekanntmachung des Hinweises auf die Patenterteilung: **24.02.2021**
(21) Anmeldenummer: 16190000.6
(22) Anmeldetag: 21.09.2016
(51) Int. Cl.: A01K 5/00, A01K 5/02

(54) **VERFAHREN ZUR FÜTTERUNG VON NUTZTIEREN**
METHOD FOR FEEDING LIVESTOCK
PROCÉDÉ D'ALIMENTATION DU BÉTAIL

(43) Veröffentlichungstag der Anmeldung: 28.03.2018
(73) Patentinhaber: Hölscher & Leuschner GmbH & Co., 48488 Emsbüren (DE)
(72) Erfinder: Hölscher, Richard, 48488 Emsbüren (DE)
(74) Vertreter: Wischmeyer, André

(56) Entgegenhaltungen:
- EP-A1- 1 250 839
- WO-A1-00/21359
- WO-A1-2009/090250
- WO-A1-2015/160241
- US-B1- 6 539 896
- US-B2- 6 615 764

## Beschreibung

Die vorliegende Erfindung betrifft ein Verfahren zur Fütterung von Nutztieren mit Futter, das in einer Fütterungsanlage, in der eine Futtermassenerfassung erfolgt, gemischt und/oder bereit gestellt und von dort zu zumindest einem Fressplatz transportiert wird, wobei über eine EDV-Anlage eine Zusammensetzung des Futters hinsichtlich von für die Fütterung der Nutztiere relevanten Bestandteilen, insbesondere bezüglich Protein-, Energie- und/oder Ballaststoffgehalt, vorgegeben wird, und wobei mittels einer Wiegeeinheit und/oder der EDV-Anlage das Gewicht der Nutztiere ermittelt wird. In der zumindest einen Wiegeeinheit und/oder in der EDV-Anlage wird die Gewichtszunahme der Nutztiere bestimmt, woraufhin in der EDV-Anlage automatisiert eine für die Nutztiere angepasste Futterzusammensetzung insbesondere tagesaktuell bestimmt wird und die Nutztiere angepasst gefüttert werden.

Heutige Mischfutterempfehlungen basieren auf dem wissenschaftlich untersuchten Bedarf insbesondere an Proteinen und Energiemengen je Tier in Abhängigkeit von der jeweiligen Körpermasse und den Tageszunahmen der Nutztiere. Beispielsweise kann es sich bei den Nutztieren um Schweine handeln, die in einer Großgruppe von mehr als 100 bis hin zu 300 Tieren gehalten werden. Für die jeweilige Genetik gibt es bei den einzelnen Schweinen anhand von Tabellenwerten absolute Bedarfswerte an Proteinen, Aminosäuren sowie an Energie. Basierend auf Abschätzungen der Körpermasse und der Fressmengen bzw. Futteraufnahmemenge ergeben sich prozentuale Anteile an Rohproteinen im Futter und die erforderliche Energiedichte des Futters. In der zugehörigen EDV-Anlage wird die Zusammensetzung des Futters hinsichtlich der Bestandteile vorgegeben, wobei über eine Wiegeeinheit die mittleren Gewichte der Tiere bestimmt werden. Teilweise wird auch die von den Nutztieren insgesamt über einen längeren Zeitraum aufgenommene Futtermasse bestimmt. Obwohl heutzutage die Mastläufer in einem Bestand überwiegend über längere Zeit von identischer Herkunft sind, variieren die für die optimale Futterzusammensetzung relevanten Parameter (Futteraufnahme, Gewicht, Zuwachs) deutlich.

Verfahren zur Fütterung von Nutztieren mit auf die Ernährungsbedürfnisse des jeweiligen Tieres angepassten Mengen und/oder Zusammensetzungen sind aus dem Stand der Technik bekannt.

EP 1 250 839 zeigt einen Futtermittelautomat für Nutztiere, bei denen das jeweilige Tier am Futterplatz identifiziert und an das Tier entsprechendes Futter abgegeben wird. Hierbei wird dem Tier eine bestimmte Futtermenge zur Verfügung gestellt.

WO 00/21359 zeigt eine Fütterungsmethode, um Nutztiere automatisch zu füttern, bei der die Futtermenge an die individuellen Ernährungsbedürfnisse der Tiere angepasst wird und das Futter durch eine Melkmaschine gewonnen wird.

WO 2015/160241 zeigt eine Fütterungsvorrichtung, bei der sowohl am Futterplatz als auch an der Tränke eine Identifikation des jeweiligen Tieres erfolgt und wobei neben der Abgabe von Futter am Futterplatz auch ein Zusatz von Futterkonzentrat in das Trinkwasser erfolgt, um eine ausreichende Nährstoffaufnahme der Nutztiere sicher zu stellen. Hierbei handelt es sich um eine Zufütterung von konzentrierten Nährmitteln.

WO 2009/090250 zeigt ein Fütterungssystem für eine individualisierte oder gruppenweise ad-libitum Fütterung von Nutztieren.

US 6,539,896 zeigt eine Fütterungsvorrichtung zur automatisierten Fütterung von Nutztieren mit einem Fütterungskarussell, das eine Anzahl einzelner Fütterungsbereiche aufweist. Der Zugang zu dem Fütterungskarussell erfolgt über eine Schleuse, in der die einzelnen Nutztiere identifiziert und gewogen werden. Ggf. kann ein Nutztier von der Schleuse einer Separierbucht zugewiesen werden.

Es ist Aufgabe der vorliegenden Erfindung, ein Fütterungsverfahren nach dem Oberbegriff vereinfacht durchführbar zu gestalten.

Die Aufgabe wird gelöst durch ein Verfahren gemäß Anspruch 1 sowie durch eine Vorrichtung gemäß Anspruch 8. Vorteilhafte Ausgestaltungen der Erfindung sind den auf diese Ansprüche rückbezogenen Unteransprüchen sowie der nachfolgenden Beschreibung zu entnehmen.

Erfindungsgemäß wird diese Aufgabe durch ein Verfahren gelöst, mit dem eine ad-libitum Fütterung der Nutztiere erfolgt sowie mittels der Fütterungsanlage und/oder der EDV-Anlage die von den Nutztieren aufgenommene Futtermasse ermittelt wird. Die Futterzusammensetzung wird in der EDV-Anlage, d.h. durch ein im Arbeitsspeicher dieser EDV-Anlage laufendes Programm, insbesondere in Abhängigkeit zumindest der aktuellen Gewichtszunahme und der aktuellen Futtermassenaufnahme des oder der Nutztiere bestimmt. Für die Bestimmung der Zusammensetzung bieten sich in Abhängigkeit der jeweiligen Empfehlungen für die Fütterung der Nutztiere beispielsweise eine Anzahl verschiedener mathematischer Funktionen an. Die Nutztiere werden durch Clusterung der individuellen Futterzusammensetzungen einzelner Tiere oder einzelner, bereits vorab selektierter Gruppen von Nutztieren in Gruppen eingeteilt.

Dem jeweiligen Nutztier wird in Abhängigkeit der Gruppenzugehörigkeit über zumindest eine Sortierschleuse einer von mehreren räumlich getrennten, mit unterschiedlich zusammengesetztem Futter versehenen Fressplätzen zur Verfügung gestellt. So können beispielsweise minimal zwei, bevorzugt zumindest drei Fressplätze für die jeweilige Gruppe von Tieren zur Verfügung gestellt werden.

Eine schwankende Gesundheitssituation oder auch klimatische Einflüsse wie zum Beispiel Hitze im Sommer führen zu Unterschieden in der Futteraufnahme der einzelnen Tiere.

Diese Unterschiede führen bei einer generell für das Tierwohl bevorzugten ad libitum-Fütterung beispielsweise dazu, dass die tatsächliche Futteraufnahme unterschätzt wird. Die mit dem Futter aufgenommene Proteinmenge übertrifft dann das für das Wachsen der Tiere notwendige Maß und der Überschuss an Proteinen wird nur energetisch genutzt, so dass die Stickstoffausscheidung in Form von Harnstoff steigt. Eine Verschwendung teuren Proteins und höhere NH₃-Emmissionen sind die Folge. Eine weitere Konsequenz ist der forcierte Fettansatz. Verminderte Schlachterlöse bei erhöhten Futterkosten beziehungsweise schlechte Futterverwertung sind die Folge.

Sofern die Futteraufnahme überschätzt wird, deckt die zugeführte Proteinmenge nicht den für das Wachstum der Tiere notwendigen Bedarf. Das Wachstumspotential der Tiere wird durch einen Protein- beziehungsweise Aminosäuremangel nicht voll ausgeschöpft, geringere Tageszunahmen und ein höherer Fettansatz sind die direkte Folge, niedrige Schlachterlöse und eine schlechtere Futterverwertung sind weitere Konsequenzen. Ähnliche Konsequenzen ergeben sich aus einer überschätzten Tageszunahme an Gewicht oder bei einer unterschätzten Tagesgewichtszunahme.

Die im Stand der Technik oftmals vorgegebenen Annahmen hinsichtlich der Futtermassenaufnahme und der Tageszunahmen in beispielsweise Gramm pro Tag beziehungsweise Gramm pro Tag und Tier werden nunmehr als tatsächlich gemessene Größen in der EDV-Anlage dazu genutzt, einen geschlossenen Regelkreis für die Zusammensetzung des Futters insbesondere hinsichtlich Protein- und Energiegehalt zu bestimmen. Weiterhin können auf diesem Weg weitere gewünschte Zusatzstoffe, z.B. Vitamine angepasst in das Futter gemischt werden. Durch die vollautomatische kontinuierliche Proteinanpassung auf das notwendige Maß können die Futterkosten reduziert werden und die Stickstoffausscheidung optimiert werden. Darüber hinaus wird der Fettansatz der Mastschweine reduziert, was zu höheren Schlachterlösen bei gleichzeitig geringen Futterkosten zu einem optimierten Ergebnis führt.

Die Regelung erfolgt automatisiert mittels der EDV-Anlage, bei der es sich beispielsweise um einen Industrie-PC handeln kann, in dessen Arbeitsspeicher ein entsprechendes Computerprogramm läuft. Diesem Programm, das die Futterzusammensetzung auf Basis der Messwerte optimiert, werden über die Schnittstellen des Industrie-PC die Informationen von der Wiegeeinheit und der Fütterungsanlage zugeführt. Alternativ kann die EDV-Anlage auch Teil der Fütterungsanlage sein und über eine oder mehrere zugehörige Schnittstellen mit der oder den Wiegeeinheiten verbunden sein. Sie kann auch mehrteilig mit mehreren und insbesondere miteinander kommunizierenden PC ausgebildet sein, die verteilt aufgestellt sind.

In einer nicht erfindungsgemäßen Ausbildung werden die Nutztiere individualisiert behandelt, so dass das gewünschte Wachstum des einzelnen Tieres optimal geregelt wird. Die sich für das individuelle Tier ergebende Futterzusammensetzung kann dann für das Nutztier passend gemischt und zur Verfügung gestellt werden. Dies setzt voraus, dass für jedes Tier ein einzelner Fressplatz zur Verfügung gestellt wird, oder aber das ggf. noch von einem vorherigen Tier vorhandene Futter vom Fressplatz entsorgt wird. Ebenso wird hierbei vorausgesetzt, dass die Tiere auch bereits beim Wiegen individualisiert sind. Als Wiegeeinheiten können mechanisch, mechanisch-elektrisch oder auch optische arbeitende Wiegeeinheiten verwendet werden. Letztere können auch zur Identifikation verwendet werden. Alternativ oder ergänzend können die Nutztiere zur Individualisierung auch gechipt und beispielsweise mit einem RFID-Chip oder einem anderen Nahfeldkommunikationsmittel versehen sein.

Um den aus einer Individualisierung entstehenden Materialaufwand zu verringern kann es bei der erfindungsgemäßen Ausbildung vorteilhaft sein, wenn die Nutztiere insbesondere eines Stalldurchlaufs hinsichtlich ihrer Futterverwertung in unterschiedliche Gruppen eingeteilt werden. Für diese unterschiedlichen Gruppen kann in der EDV-Anlage jeweils eine mittlere Futterzusammensetzung hinsichtlich insbesondere des Protein- und Energiebedarfs bestimmt werden. Insbesondere ergeben sich die Gruppen aus der Unterteilung oder Clusterung der individuellen Futterzusammensetzungen einzelner Tiere oder einzelner, bereits vorab selektierter Gruppen von Nutztieren. Für ein Cluster von Tieren, denen individuell eine ähnliche Futterzusammensetzung zugewiesen wird, wird in der EDV-Anlage somit beispielsweise eine mittlere Zusammensetzung des Futters von Nutztieren bestimmt. Gegebenenfalls kann in der Berechnung auch eine mittlere Gewichtszunahme eines Clusters gemeinsam mit einer mittleren Futtermassenaufnahme verwendet werden.

Die Zusammensetzung des Futters mit zu erreichenden Proteingehalten und Energiegehalten, beispielsweise ergänzt unter Berücksichtigung von weiteren Futterbestandteilen wie Vitaminen oder bestimmten Ballaststoffen wie auch unter Berücksichtigung beispielsweise der Kosten einzelner Komponenten, stellt ein Optimierungsproblem dar, für das eine Vielzahl von Lösungswegen existieren.

Vorzugsweise wird insbesondere zum Erreichen gewünschter Magerfleischanteile der Nutztiere der Ballaststoffgehalt im Futter angepasst.

Weiterhin ist es erfindungsgemäß von Vorteil, wenn die Nutztiere auf dem Weg zum Fressplatz und somit vor der Futteraufnahme gewogen werden. Die Gewichtsbestimmung ist somit von der Futteraufnahme unbeeinflusst.

Bei einer weiteren Ausgestaltung des erfindungsgemäßen Verfahrens werden die Nutztiere auf dem Weg zurück vom Fressplatz gewogen. Es hat sich nämlich gezeigt, dass Schweine eher reinliche Tiere sind und nicht am Fressplatz koten. Aus der Gewichtsbestimmung im Zulauf zum und im Rücklauf vom Fressplatz kann somit die Futtermassenaufnahme einem Schwein individuell zugeordnet werden. Voraussetzung ist, dass die Schweine nicht nur im Zulauf sondern auch im Rücklauf individualisierbar sind. Entsprechend müssen Zu- und Rücklauf mit einer Vorrichtung zur Identifikation versehen sein.

In einer weiteren Ausbildung der Erfindung wird der Landwirt bei Abweichungen der sich ergebenen Futterzusammensetzung von den Empfehlungen beispielsweise der Deutsche Landwirtschafts-Gesellschaft von der auf der EDV-Anlage laufenden Software auf die Abweichung aufmerksam gemacht. Hierbei kann eine optimierte Futterzusammensetzung vorgeschlagen werden, damit vorzugsweise nach einer Bestätigung durch den Landwirt die Fütterung an die aktuell vorherrschenden Mastbedingungen angepasst oder verworfen werden kann. Die Optimierungen werden für jedes Tier beziehungsweise für jede Untergruppe von Tieren separat vorgenommen.

Die eingangs gestellte Aufgabe wird auch durch eine Vorrichtung zur Durchführung des vor- und/oder nachbeschriebenen Verfahrens gelöst, welche eine Fütterungsanlage mit einer Futtermassenerfassung und mit mehreren Vorratsspeichern für die jeweiligen Bestandteile des Futters umfasst. Weiterhin weist die Vorrichtung zumindest zwei Fressplätze, auf, wenigstens eine Wiegeeinheit im Zulauf zum jeweiligen Fressplatz, ggf. zumindest eine Wiegeeinheit im Rücklauf vom Fressplatz und eine EDV-Anlage, die Daten der Fütterungsanlage und der Wiegeeinheit(en) verarbeitet und die mit einem Computerprogramm versehen ist, welches auf Basis der insbesondere täglichen Erfassung des Gewichts sowie des Futtermassenverbrauchs automatisiert eine individuelle Futterzusammensetzung bestimmt, die Nutztiere durch Clusterung der individuellen Futterzusammensetzungen einzelner Nutztiere oder einzelner, bereits vorab selektierter Gruppen von Nutztieren in unterschiedliche Gruppen eingeteilt und die Fütterungsanlage dergestalt steuert, dass eine ad-libitum Fütterung der Nutztiere erfolgt und dass dem jeweiligen Nutztier in Abhängigkeit der Gruppenzugehörigkeit über die zumindest eine Sortierschleuse (9) einer der Fressplätze (12,13) zur Verfügung gestellt wird, wobei dem Fressplatz eine wie vorstehend beschrieben gemittelte Futterzusammensetzung zur Verfügung gestellt wird. Die Fressplätze sind für das Nutztier nur über zumindest eine Sortierschleuse zugänglich. Die Sortierschleuse ist hierfür mit Mitteln zur Identifikation des Tieres ausgestattet und kann dieses dann gesteuert durch die Vorgaben der EDV-Anlage zu dem passenden Fressplatz leiten. Es versteht sich, dass die Fütterungsanlage weitere, dem Fachmann geläufige Komponenten wie z.B. Mischer und Rohrleitungen zu den Fressplätzen/Futtertrögen der Nutztiere aufweist.

Die einzelnen Teile der erfindungsgemäßen Vorrichtung wie Wiegeeinheit, Sortierschleuse und -sofern die EDV-Anlage nicht Teil davon ist- eine Fütterungsanlage sind über Kommunikationsschnittstellen mit der EDV-Anlage verbunden, so dass drahtgebunden oder-los Daten übermittelt werden können. Die einzelnen Teile der Vorrichtung können selbst wiederum mit EDV-Einheiten versehen sein, die beispielsweise eine Individualisierung der Tiere vornehmen.

Weitere Vorteile und Einzelheiten der Erfindung lassen sich der nachfolgenden Figurenbeschreibung entnehmen. Schematisch dargestellt zeigt:
- Fig. 1:: Ein Flussdiagramm eines Teils des erfindungsgemäßen Verfahrens,
- Fig. 2:: einen Teil einer Vorrichtung zur Durchführung des erfindungsgemäßen Verfahrens.

Einzelne technische Merkmale der nachfolgenden Figurenbeschreibung können in Kombination mit den Merkmalen der unabhängigen Ansprüche und gegebenenfalls etwaiger weiterer Ansprüche zu erfindungsgemäßen Gegenständen kombiniert werden. Sofern sinnvoll, werden funktional gleichwirkende Elemente mit identischen Bezugsziffern versehen.

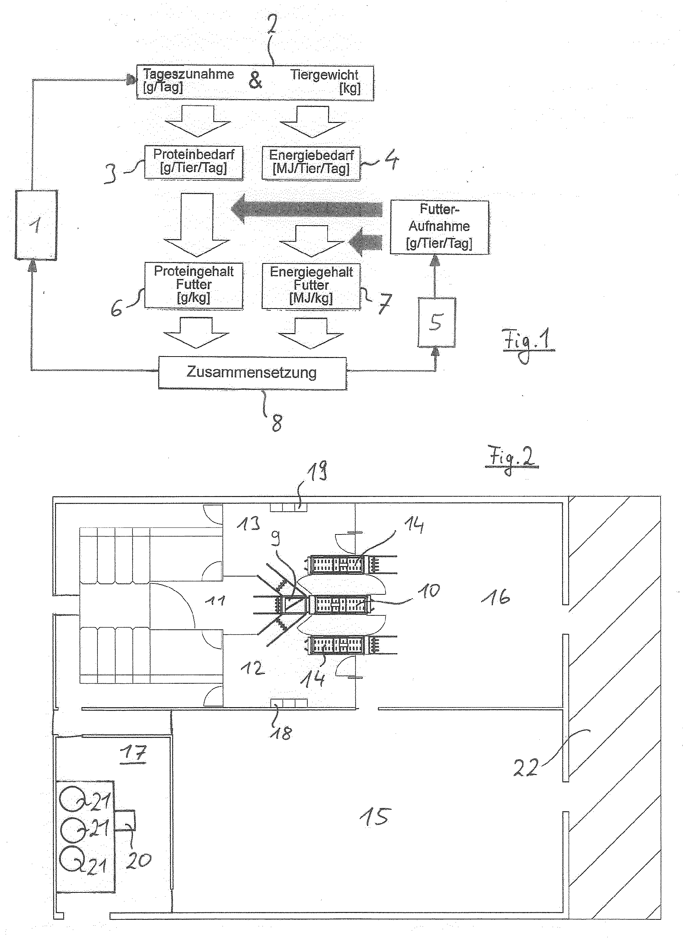

Ein erfindungsgemäßes Verfahren zur ad libitum-Fütterung von Nutztieren ist in Teilen in Figur 1 beschreiben. Dargestellt ist teilweise ein prinzipieller Regelkreis zur Bestimmung der Futterzusammensetzung aus beispielsweise Misch- und Grundfutter. Mittels einer im Zulauf zu einem Fressplatz befindlichen Wiegeeinheit 1 wird das Gewicht des Nutztieres täglich bestimmt. Mittels der EDV-Anlage wird im Schritt 2 die Tageszunahme in Gramm pro Tag berechnet. Mittels vorgegebener Werte, z.B. Kurven oder Tabellen wird in der EDV-Anlage anschließend an den Schritten 3 und 4 der Proteinbedarf der jeweiligen Tiere in Gramm pro Tier und Tag sowie der Energiebedarf der jeweiligen Tiere in MJ pro Tier und Tag bestimmt. Parallel oder auch zu einen anderen Tageszeitpunkt wird mittels einer Futtermassenerfassung einer Fütterungsanlage 5 die Futteraufnahme eines bestimmten Tieres in Gramm pro Tag definiert. Gegebenenfalls kann diese Futtermassenaufnahme auch über einen Tageszeitraum aus der Gesamtaufnahme einer aktuell gleich zu behandelnden Gruppe für ein einzelnes Tier gemittelt werden. Aus diesen Daten kann dann tierindividuell oder auch gruppenspezifisch für eine Gruppe von identischen Leistungsparametern aufweisenden Tieren der Protein- und Energiegehalt des Futters in den Positionen 6 und 7 bestimmt werden. Hieraus ermittelt sich dann die Zusammensetzung des Futters (Position 8). Nach der Fütterung mit diesem Futter werden dann wiederum zu einem späteren Zeitpunkt, insbesondere bereits am nächsten Tag, zumindest jedoch wenige Tage später im Regelkreis wieder die Gewichte und Futteraufnahmen bestimmt.

Für die Futterzusammensetzung können in dem Programm der EDV-Anlage gewisse Inhaltsstoffe oder für spezielle Komponenten auch Grenzen vorgegeben werden, die nicht über- oder unterschritten werden sollen. Vitamine, Mineralstoffe oder auch einzelne Aminosäuren wie Lysin können über definierbare oder vordefinierte Futtermittelzutaten abgedeckt und in die Berechnung der Zusammensetzung als eine Komponente mit einbezogen werden. Sofern alle ausgewählten Komponenten zusätzlich mit Kosten definiert beziehungsweise hinterlegt werden, kann auch hinsichtlich der Minimierung der Kosten einer Optimierung der Zusammensetzung in dem Computerprogramm automatisiert durchgeführt werden.

Um das Energieniveau der jeweiligen Ration bedarfskonform einstellen zu können, kann beispielsweise als eine Futterkomponente eine kostengünstige Rohfaserquelle mit geringem Energiegehalt verwendet werden. Ganzpflanzensilagen von Mais oder Getreide sind zur Steuerung der Energiedichte bei Einsatz einer Flüssigfütterung ideale Komponenten der Gestaltung der Zusammensetzung. Höhere Anteile an Rohfasermischfutter können hierbei die Stickstoffemissionen um bis zu 40 % reduzieren, weil Stickstoff nicht über den Harn ausgeschieden werden muss, sondern im Kot fixiert wird. Der pH-Wert im Kot und damit in der Gülle ist gering und die NH₃-Freisetzung aus der Gülle schon allein deswegen reduziert. Durch die vollautomatische kontinuierliche Proteinanpassung auf das notwendige Maß können die Futterkosten reduziert werden und die Stickstoffausscheidung optimiert werden. Darüber hinaus wird der Fettansatz der Mastschweine reduziert, was zu höheren Schlachterlösen bei gleichzeitig geringen Futterkosten zu einem optimierten Ergebnis führt.

Eine Vorrichtung zur Durchführung des erfindungsgemäßen Verfahrens ist in der Figur 2 dargestellt. In dem Zulauf zu einer Sortierschleuse 9 befindet sich eine erste Wiegeeinheit 10. Über die Sortierschleuse können ein Separierbereich 11 und zwei verschiedene Fressplätze 12 und 13 angesteuert werden, die räumlich voneinander getrennt sind. In diesen Fressplätzen 12 und 13 wird eine auf die in diesem Fall 2 Untergruppen abgestellte Fütterung der Nutztiere vorgenommen. Nachdem die Tiere gefressen haben, können sie über die im Rücklauf vorhandenen Wiegeeinheiten 14 verwogen werden. Über diesen Weg gelangen die Tiere dann auch in den Aktivitätsbereich 15, den Liegebereich 16 und den Außenbereich 22. Somit können die Nutztiere sowohl vor dem Fressen wie auch nach dem Fressen verwogen werden, so dass für die bei dem Durchgang gleichzeitig individualisierten Tiere eine entsprechend individuelle Futteraufnahme bestimmt werden kann. Eine EDV-Anlage 20 befindet sich zusammen mit einem Teil der Fütterungsanlage in einem Raum 17, von dem aus die einzelnen Tröge 18 und 19 der Fressplätze 12 und 13 versorgt werden. Die Versorgungsleitungen und die aus Vorratsspeichern 21 versorgte Mischeinheit sind nicht dargestellt.

## Patentansprüche

1. Verfahren zur Fütterung von Nutztieren mit Futter, das in einer Fütterungsanlage, in der eine Futtermassenerfassung erfolgt, gemischt und/oder bereit gestellt und von dort zu zumindest einem Fressplatz (12,13) transportiert wird, wobei über eine EDV-Anlage (20) eine Zusammensetzung des Futters hinsichtlich von für die Fütterung der Nutztiere relevanten Bestandteilen, insbesondere bezgl. Protein-, Energie- und/oder Ballaststoffgehalt, vorgegeben wird, und wobei mittels zumindest einer Wiegeeinheit (10) und/oder der EDV-Anlage (20) das Gewicht der Nutztiere ermittelt wird, wobei in der Wiegeeinheit (10) und/oder in der EDV-Anlage (20) die Gewichtszunahme der Nutztiere bestimmt wird, woraufhin in der EDV-Anlage (20) automatisiert eine für die Nutztiere angepasste Futterzusammensetzung insbesondere tagesaktuell bestimmt wird und die Nutztiere angepasst gefüttert werden, wobei eine ad-libitum Fütterung der Nutztiere erfolgt und mittels der Fütterungsanlage und/oder der EDV-Anlage die von den Nutztieren aufgenommene Futtermasse ermittelt wird, **dadurch gekennzeichnet, dass** die Nutztiere durch Clusterung der individuellen Futterzusammensetzungen einzelner Nutztiere oder einzelner, bereits vorab selektierter Gruppen von Nutztieren in unterschiedliche Gruppen eingeteilt werden und dem jeweiligen Nutztier in Abhängigkeit der Gruppenzugehörigkeit über zumindest eine Sortierschleuse (9) einer von mehreren räumlich getrennten, mit unterschiedlich zusammengesetztem Futter versehenen Fressplätzen (12,13) zur Verfügung gestellt und wobei einem Fressplatz (12, 13) eine gemittelte Futterzusammensetzung zur Verfügung gestellt wird.

2. Verfahren nach Anspruch 1, **dadurch gekennzeichnet, dass** die Nutztiere hinsichtlich ihrer Futterverwertung in unterschiedliche Gruppen eingeteilt werden.

3. Verfahren nach Anspruch 1 oder 2, **dadurch gekennzeichnet, dass** in der EDV-Anlage (20) für unterschiedliche Gruppen von Nutztieren jeweils eine mittlere Futterzusammensetzung bestimmt wird.

4. Verfahren nach einem der vorherigen Ansprüche, **dadurch gekennzeichnet, dass** insbesondere zum Erreichen gewünschter Magerfleischanteile der Nutztiere der Ballaststoffgehalt im Futter angepasst wird.

5. Verfahren nach einem der vorherigen Ansprüche, **dadurch gekennzeichnet, dass** die Nutztiere auf dem Weg zum Fressplatz (12,13) gewogen werden.

6. Verfahren nach einem der vorherigen Ansprüche, **dadurch gekennzeichnet, dass** die Nutztiere auf dem Weg zurück vom Fressplatz (12,13) gewogen werden.

7. Verfahren nach einem der vorherigen Ansprüche, **dadurch gekennzeichnet, dass** die Futterzusammensetzung in der EDV-Anlage (20) insbesondere in Abhängigkeit zumindest der aktuellen Gewichtszunahme und der aktuellen Futtermassenaufnahme des oder der Nutztiere bestimmt wird.

8. Vorrichtung zur Durchführung des Verfahrens nach einem der vorherigen Ansprüche, umfassend eine Fütterungsanlage mit einer Futtermassenerfassung und mit mehreren Vorratsspeichern (21), einer Mehrzahl von Fressplätzen (12,13) die für das Nutztier nur über zumindest eine Sortierschleuse (9) zugänglich sind, wenigstens eine Wiegeeinheit (10) im Zulauf zum Fressplatz, ggf. wenigstens einer Wiegeeinheit (14) im Rücklauf vom Fressplatz (12,13) und eine EDV-Anlage (20), die Daten der Fütterungsanlage und der Wiegeeinheit(en) (10,14) verarbeitet und die hierfür mit einem Computerprogramm versehen ist, welches auf Basis der insbesondere täglichen Erfassung des Gewichts sowie des Futtermassenverbrauchs automatisiert eine individuelle Futterzusammensetzung bestimmt, die Nutztiere durch Clusterung der individuellen Futterzusammensetzungen einzelner Nutztiere oder einzelner, bereits vorab selektierter Gruppen von Nutztieren in unterschiedliche Gruppen einteilt ,und die Fütterungsanlage dergestalt steuert, dass eine ad-libitum Fütterung der Nutztiere erfolgt und dass dem jeweiligen Nutztier in Abhängigkeit der Gruppenzugehörigkeit über die zumindest eine Sortierschleuse (9) einer der Fressplätze (12,13) zur Verfügung gestellt wird, wobei einem Fressplatz (12,13) eine gemittelte Futterzusammensetzung zur Verfügung gestellt wird,

## Claims

1. Method for feeding farm animals with feed that is mixed and/or prepared in a feeding system in which a feed quantity recording operation takes place and from there transported to at least one feeding place (12, 13), wherein a composition of the feed is predefined by means of an EDP system (20) on the basis of relevant components for feeding the farm animals, in particular with respect to protein, energy and/or fibre content, and wherein the weight of the farm animals is determined by means of at least one weighing unit (10) and/or the EDP system (20) and the weight increase of the farm animals is determined in the weighing unit (10) and/or in the EDP system (20), whereupon a feed composition adapted to the farm animals is determined in the EDP system (20) on an automated basis, in particular daily, and the feed provided to the farm animals is adapted, wherein feeding of the farm animals is operated ad libitum and the quantity of feed consumed by the farm animals is determined by means of the feeding system and/or EDP system, **characterised in that** the farm animals are divided into different groups by clustering the individual feed compositions of individual farm animals or of individual groups of farm animals already selected beforehand, and one of a number of spatially separate feeding places (12, 13) provided with differently composed feed is made available to the respective farm animal by means of at least one sorting gate (9) depending on group membership, and wherein an averaged feed composition is made available to a feeding place (12, 13).

2. Method as claimed in claim 1, **characterised in that** the farm animals are divided into different groups on the basis of their feed conversion ratio.

3. Method as claimed in claim 1 or 2, **characterised in that** an average feed composition is determined respectively for different groups of farm animals in the EDP system (20).

4. Method as claimed in one of the preceding claims, **characterised in that** the fibre content in the feed is adapted in particular with a view to achieving desired lean meat proportions of the farm animals.

5. Method as claimed in one of the preceding claims, **characterised in that** the farm animals are weighed on the way to the feeding place (12, 13).

6. Method as claimed in one of the preceding claims, **characterised in that** the farm animals are weighed on the way back from the feeding place (12, 13).

7. Method as claimed in one of the preceding claims, **characterised in that** the feed composition is determined in the EDP system (20) in particular depending on at least the current weight increase and the current feed quantity consumption of the farm animal or animals.

8. Device for implementing the method as claimed in one of the preceding claims, comprising a feeding system having a feed quantity recording system and having a number of supply containers (21), a plurality of feeding places (12, 13) which are accessible to the farm animal via at least one sorting gate (9) only, at least one weighing unit (10) in the approach run to the feeding place, optionally at least one weighing unit (14) in the return run from the feeding place (12, 13) and an EDP system (20) which processes the data of the feeding system and the weighing unit(s) (10, 14) and which, for this purpose, is provided with a computer programme which determines an individual feed composition on the basis of the in particular daily recording of the weight and feed quantity consumption on an automated basis, the farm animals being divided into different groups by clustering the individual feed compositions of individual farm animals or of individual groups of farm animals already selected beforehand and the feeding system being controlled in such a way that feeding of the farm animals is operated ad libitum and one of the feeding places (12, 13) is made available to the respective farm animal via the at least one sorting gate (9) depending on group membership, and an averaged feed composition is made available to a feeding place (12, 13).

## Revendications

1. Procédé destiné à l'alimentation du bétail avec du fourrage qui est mélangé et/ou préparé dans une installation d'affouragement, dans laquelle un enregistrement de la masse de fourrage est réalisé, puis est transporté depuis celle-ci jusqu'à au moins une mangeoire (12,13), dans lequel une installation informatique (20) permet de prédéfinir une composition du fourrage relative aux composants importants pour l'alimentation du bétail, en particulier concernant la teneur en protéines, en énergie et/ou en fibres alimentaires, et dans lequel au moins une unité de pesée (10) et/ou l'installation informatique (20) permet de déterminer le poids du bétail, l'augmentation du poids du bétail étant définie dans l'unité de pesée (10) et/ou dans l'installation informatique (20), ce qui permet de définir de manière automatique dans l'installation informatique (20), en particulier quotidiennement, une composition du fourrage adaptée au bétail et d'alimenter le bétail de manière adaptée, dans lequel une alimentation du bétail est réalisée ad libitum et l'installation d'affouragement et/ou l'installation informatique permet de calculer la masse de fourrage reçue par le bétail, **caractérisé en ce que** le bétail est réparti en différents groupes par le biais d'un groupement en masse des compositions individuelles de fourrage pour chaque bétail individuel ou chaque groupe individuel de bétail déjà présélectionné et il est mis à disposition du bétail respectif, en fonction de son appartenance au groupe, une mangeoire parmi plusieurs mangeoires (12, 13) séparées spatialement et contenant du fourrage de compositions différentes par le biais d'au moins un sas de triage (9) et dans lequel une composition moyenne de fourrage est mise à disposition d'une mangeoire (12, 13).

2. Procédé selon la revendication 1, **caractérisé en ce que** le bétail est réparti en différents groupes par rapport à la valorisation de son fourrage.

3. Procédé selon la revendication 1 ou 2, **caractérisé en ce que** dans l'installation informatique (20) une composition moyenne de fourrage est respectivement définie pour des groupes de bétail différents.

4. Procédé selon une des revendications précédentes, **caractérisé en ce que** la teneur en fibres alimentaires dans le fourrage est adaptée en particulier pour atteindre les proportions souhaitées de viande maigre du bétail.

5. Procédé selon une des revendications précédentes, **caractérisé en ce que** le bétail est pesé sur le chemin allant à la mangeoire (12,13).

6. Procédé selon une des revendications précédentes, **caractérisé en ce que** le bétail est pesé sur le chemin revenant de la mangeoire (12,13).

7. Procédé selon une des revendications précédentes, **caractérisé en ce que** la composition du fourrage est définie dans l'installation informatique (20) en particulier en fonction au moins de l'augmentation actuelle du poids et de la réception actuelle de masse de fourrage du bétail considéré individuellement ou collectivement.

8. Dispositif destiné à la mise en œuvre du procédé selon une des revendications précédentes, comprenant une installation d'affouragement avec un enregistrement de la masse de fourrage et avec plusieurs espaces de stockage (21), une pluralité de mangeoires (12,13), qui sont accessibles au bétail uniquement par le biais d'au moins un sas de triage (9), au moins une unité de pesée (10) sur le chemin allant vers la mangeoire, éventuellement au moins une unité de pesée (14) sur le chemin revenant de la mangeoire (12,13) et une installation informatique (20) qui traite des données de l'installation d'affouragement et de l'unité (des unités) de pesée (10,14) et qui est munie à cet effet d'un programme informatique qui définit de manière automatique une composition de fourrage individuelle, sur la base en particulier de l'enregistrement quotidien du poids ainsi que de la consommation de masse de fourrage, répartit le bétail en différents groupes par le biais d'un groupement en masse des compositions individuelles de fourrage pour chaque bétail individuel ou chaque groupe individuel de bétail déjà présélectionné et commande l'installation d'affouragement de telle sorte qu'une alimentation du bétail est réalisée ad libitum et qu'il est mis à disposition du bétail respectif, en fonction de son appartenance au groupe, une mangeoire parmi plusieurs mangeoires (12,13) par le biais d'au moins un sas de triage (9), où une composition moyenne de fourrage est mise à disposition d'une mangeoire (12, 13).
